(19) Europäisches Patentamt / European Patent Office / Office européen des brevets

(11) **EP 3 961 799 A1**

(12) **EUROPEAN PATENT APPLICATION**

(43) Date of publication:
**02.03.2022 Bulletin 2022/09**

(21) Application number: **21192778.5**

(22) Date of filing: **24.08.2021**

(51) International Patent Classification (IPC):
*H01M 50/538* (2021.01)   *H01M 50/54* (2021.01)
*H01M 50/103* (2021.01)   *H01M 50/105* (2021.01)
*H01M 50/107* (2021.01)

(52) Cooperative Patent Classification (CPC):
**H01M 50/54; H01M 50/103; H01M 50/105;
H01M 50/107; H01M 50/538**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020   CN 202010899177**

(71) Applicant: **BYD Company Limited
Guangdong 518118 (CN)**

(72) Inventors:
• **Wang, Xinyue**
  **Shenzhen, Guangdong, 518118 (CN)**
• **Deng, Dongjun**
  **Shenzhen, Guangdong, 518118 (CN)**

(74) Representative: **Hoffmann Eitle
Patent- und Rechtsanwälte PartmbB
Arabellastraße 30
81925 München (DE)**

(54) **BATTERY**

(57)     This application provides a battery, including: a casing; a cover plate, the cover plate being configured to cover the casing; and a core, the core being disposed in the casing and provided with tabs, a plurality of tabs being connected to the cover plate after convergence. A tab bending space for accommodating a bent tab is formed between the cover plate and the core. A height of the tab bending space along a first direction is greater than D/10 and less than 3D/4, and D is a thickness of the core. The battery in this application has a reasonable tab bending space design, and such a space design can not only ensure that the tab bending angle is kept within a certain range to avoid a short circuit so as to improve the safety of the battery, but also can ensure the battery core capacity.

FIG. 1

EP 3 961 799 A1

## Description

### FIELD

This application relates to the field of batteries, and in particular, to a secondary battery.

### BACKGROUND

In the prior art, for a secondary battery, a tab led out from the core bends to different degrees in the process of being connected to a cover plate. When the tab bends, the root portion of the tab tilts to push down a separator. The tilting may even be so great that the root portion of the tab crosses the separator and comes into contact with an electrode plate, resulting in a short circuit in the secondary battery. The space design inside the casing of a battery has certain impact on the tab bending angle. If the space is excessively small, the tab is always in a pressed state in the small space, which cannot meet the requirements on the tab bending angle, resulting in a short circuit. If the bending space is excessively large, utilization of the height of the battery core is reduced, resulting in a decreased capacity of the battery core.

### SUMMARY

The content of this application is intended to resolve at least one of the technical problems existing in the prior art.

For this purpose, this application provides a battery, including:

> a casing;
> a cover plate, the cover plate being configured to cover the casing; and
> a core, the core being disposed in the casing and provided with tabs, where
>
>> a tab bending space for accommodating a bent tab is formed between the cover plate and the core, a height of the tab bending space along a first direction is greater than D/10 and less than 3D/4, and
>> D is a thickness of the core.

The height of the tab bending space along the first direction is $D_g$, and $D_g$ meets a relational expression:

$$D * \sin 45° \geq D_g \geq [D/2 - (\tan(90° - a) * D_z)] \times \tan \beta,$$

where
D is the thickness of the core, Dz ranges from 1 mm to 2 mm, a is a tab bending angle, and $\beta$ ranges from 10 degrees to 30 degrees.

The tab bending angle ranges from 45 degrees to 135 degrees.

The core includes a positive electrode plate, a negative electrode plate, and a separator disposed between the positive electrode plate and the negative electrode plate;

> the tab bending space is divided into a tab bending region and a tab transition region;
> the tab bending region is disposed on an end portion of the separator, the tab bends on the end portion of the separator and forms a tab bending angle, and the tab bending angle is located in the tab bending region; and
> the tab transition region is disposed between the tab bending region and the cover plate, and the tab after bending passes through the tab transition region and is then fixedly connected to the cover plate.

A height of the tab bending region along the first direction ranges from 1 mm to 2 mm.

Along the first direction, a height of the separator is greater than a height of the negative electrode plate, and the height of the negative electrode plate is greater than a height of the positive electrode plate;

> along the first direction, a part of the separator exceeding an end portion of the negative electrode plate is an exposed separator, and a region in which the exposed separator is located forms a separator extension region; and
> the tab bends at a junction of the separator extension region and the tab bending region and forms the tab bending angle.

The exposed separator and the tab are in parallel to each other in the separator extension region.

The battery further includes an inner spacer and an outer spacer;

> the inner spacer and the outer spacer are fixedly connected to the cover plate respectively; and
> a distance from a lower surface of the inner spacer to an upper end surface of the core ranges from 0 mm to 1 mm.

The plurality of tabs converge and form a tab convergence portion, and a tab protection sheet is provided outside the tab convergence portion; and
a cover plate lead-out sheet is further disposed on the cover plate, and the tab protection sheet is connected to the cover plate lead-out sheet.

A width of the tab protection sheet ranges from 8 mm to 12 mm.

This application has the following beneficial effects:
The design of the tab bending space in the casing of the battery in this application avoids a case that the tab is pressed to cause a short circuit due to an excessively small tab bending space and a case that the tab is pulled due to an excessively large tab bending space and utilization of the height of the battery core is reduced. The battery in this application has a reasonable space design, thereby ensuring that the tab bending angle is kept within a certain range to avoid a short circuit so as to improve the safety of the battery, and ensuring utilization of the height of the battery core to improve the battery core capacity.

Additional aspects and advantages of this application will be given in the following description, some of which will become apparent from the following description or may be learned from practices of this application.

## BRIEF DESCRIPTION OF THE DRAWINGS

The foregoing and/or additional aspects and advantages of this application will become apparent and comprehensible in the embodiment description made with reference to the following accompanying drawings, where:

> FIG. 1 is a schematic cross-sectional view of a battery according to an embodiment of this application;
> FIG. 2 is a schematic diagram of tabs of a core of a battery that do not bend or that are spread after convergence according to an embodiment of this application; and
> FIG. 3 is a schematic diagram of a core of a battery connected to a cover plate in parallel before convergence or when being spread according to an embodiment of this application.

Reference numerals:

> 10. battery;
> 1. casing; 11. separator extension region; 12. tab bending region; and 13. tab transition region;
> 2. cover plate; 21. cover plate lead-out sheet; 22. terminal; 23. solder joint; and 24. insulating member
> 3. core; 31. positive electrode plate; 32. negative electrode plate; 33. separator; 34. tab; 35. tab protection sheet; 341. tab end-portion staggered layer region; 342. tab soldering region; and 343. pre-soldered press-fit region;
> 4. inner spacer; and
> 5. outer spacer.

## DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining this application, and should not be construed as a limitation on this application.

In the description of this application, it is to be understood that orientation or position relationships indicated by the terms such as "center", "thickness", "inner", "outer", "axial", "radial", and "circumferential" are based on orientation or position relationships shown in the accompanying drawings, and are used only for ease and brevity of illustration and description in this application, rather than indicating or implying that the mentioned apparatus or component needs to have a particular orientation or needs to be constructed and operated in a particular orientation. Therefore, such terms are not to be construed as limiting of this application.

A battery 10 according to an embodiment of this application is described below with reference to the accompanying drawings. The battery 10 may be a secondary lithium ion battery or battery of another type.

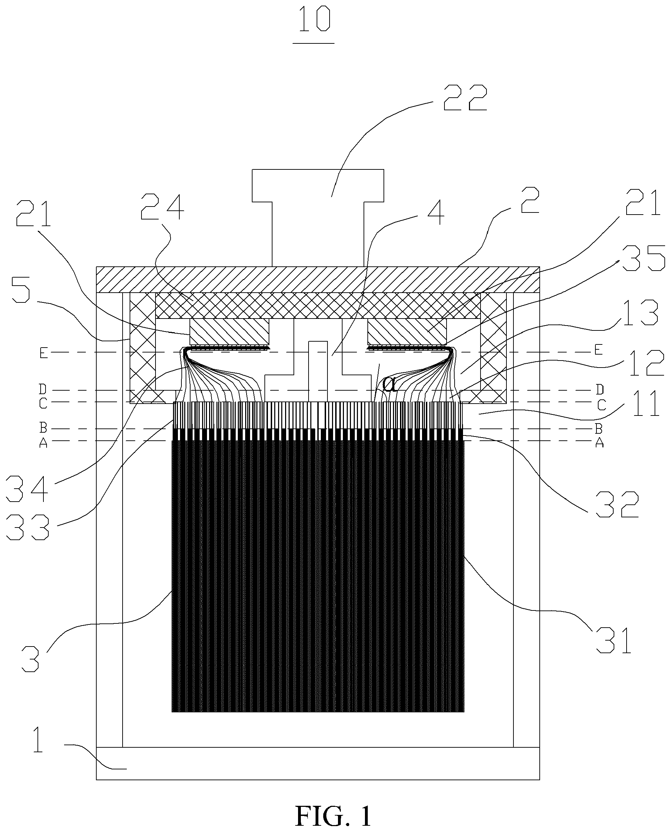

As shown in FIG. 1, the battery 10 in the embodiments of this application includes: a casing 1, a cover plate 2, and a core 3. A cavity for accommodating the core 3 is provided in the casing 1, and the core 3 is disposed in the cavity in the casing 1. One end of the casing 1 is provided with an opening, and the cover plate 2 covers the opening of the casing 1. The core 3 is a laminated core or a wound core. There is at least one core 3, for example, there is one, two or three cores 3 disposed in the casing 1. A quantity of the cores 3 is not specifically limited, as long as the core can meet a requirement in practical installation or usage. The core 3 includes a positive electrode plate 31, a negative electrode plate 32, and a separator 33 disposed between the positive electrode plate and the negative electrode plate. As shown in FIG. 1, an A-A line is a straight line at which an end portion of the positive electrode plate 31 is located; a B-B line is a straight line at which an end portion of the negative electrode plate 32 is located; and a C-C line is a straight line at which an end portion of the separator 33 is located. A height of the separator 33 along a first direction is greater than a height of the negative electrode plate 32 along the first direction, and the height of the negative electrode plate 32 along the first direction is greater than a height of the positive electrode plate 31 along the first direction. The first direction is a height direction of the battery 10. Along the first direction, a part of the separator 33 exceeding an end portion of the negative electrode plate 32 is an exposed separator. A plurality of tabs 34 are disposed on the core 3, and the plurality of tabs 34 are connected to electrode plates in the core 3 respectively. The tabs 34 include positive tabs and negative tabs. The positive tabs are connected to the positive electrode plate, and the negative tabs are connected to the negative electrode plate. Ends of a plurality of positive tabs are connected to the positive electrode plate respectively, and the other ends of the plurality of positive tabs are connected to the cover plate after convergence. Ends of a plurality of negative tabs are connected to the negative electrode plate respectively, and the other ends of the plurality of negative tabs are connected to the cover plate after convergence.

As shown in FIG. 1, a tab bending space for accommodating the bent tab 34 is formed between the cover plate 2 and the core 3. The tab bending space includes a tab bending region 12 and a tab transition region 13. As shown in FIG. 1, a D-D line is a dividing line between the tab bending region 12 and the tab transition region 13. A region between the D-D line and an E-E line is the tab transition region 13. Along the first direction, apart of the separator 33 exceeding an end portion of the negative electrode plate 32 is an exposed separator, and a region in which the exposed separator is located forms a separator extension region 11. The separator extension region 11, the tab bending region 12, and the tab transition region 13 are distributed in sequence along the first direction. The tab transition region 13 is disposed between the tab bending region 12 and the cover plate 2, and the tab transition region 13 is arranged adjacent to the tab bending region 12. The bent tab 34 passes through the tab transition region 13 and is then fixedly connected to the cover plate 2. The first direction is the height direction of the battery 10. A height of the tab bending region 12 along the first direction ranges from 1 mm to 2 mm. In the separator extension region 11, the exposed separator is parallel to the tab, thereby avoiding a case that the tab pushes down the separator to cause a short circuit.

The tab bending region 12 is located on an end portion of the separator 33. The tab 34 bends on the end portion of the separator 33 and forms a tab bending angle a. The tab bending angle a is located in the tab bending region 12. Specifically, the tab 34 bends at a junction of the separator extension region 11 and the tab bending region 12 and forms the tab bending angle a. The tab bending angle a ranges from 45 degrees to 135 degrees. Preferentially, the tab bending angle ranges from 60 degrees to 120 degrees. The design of the tab bending angle avoids a case that when the tabs bends, the positive and negative electrode plates and the separator press each other due to an excessively small tab bending angle to cause a short circuit of the battery.

A cover plate lead-out sheet 21 is provided on an inner side surface of the cover plate 2. A tab bending space is formed between the cover plate lead-out sheet 21 and the core 3. The tab transition region 13 is disposed between the tab bending region 12 and the cover plate lead-out sheet 21. The inner side surface of the cover plate 2 refers to a side surface of the cover plate 2 opposite to the core 3. After the convergence of the plurality of tabs 34, a tab protection sheet 35 is disposed at a junction of the plurality of tabs 34. A tab convergence portion formed by the plurality of tabs 34 after convergence is disposed between two tab protection sheets 35. The tab convergence portion is soldered to the tab protection sheet 35. The tab protection sheet 35 is soldered to the cover plate lead-out sheet 21 of the cover plate 2, so as to connect the tab 34 to the cover plate 2. A width of the tab protection sheet 35 is greater than or equal to 8 mm and less than or equal to 12 mm. The tab protection sheet 35 ensures that the tab is not ultrasonically cracked during soldering and avoids capacity loss. The width design of the tab protection sheet 35 further ensures that a sufficient soldering region is provided for subsequent laser soldering, and also ensures full compaction during laser soldering, thereby improving the reliability of laser soldering. As shown in the embodiment of FIG. 1, the battery 10 has two cores 3, and the cover plate 2 has two cover plate lead-out sheets 21. After convergence of the plurality of tabs 34 of each core 3, the tabs 34 are bent to be parallel to the cover plate lead-out sheet 21 and are soldered to the cover plate lead-out sheet 21 respectively, so as to ensure reliable soldering of the cover plate lead-out sheet 21 and the tab protection sheet 35. A terminal 22 is disposed on the cover plate 2. The cover plate lead-out sheet 21 is connected to the terminal 22, and the tab protection sheet 35 is soldered to the cover plate lead-out sheet 21, so as to implement connection and current conduction. An insulating member 24 is further disposed between the inner side surface of the cover plate 2 and the cover plate lead-out sheet 21. The insulating member 24 insulates the cover plate 2 from positive and negative electrodes of the core, thereby preventing the positive and negative electrodes from coming into contact with the cover plate at the same time to cause a short circuit of the battery.

In order to ensure that the tab bending angle a is kept within a certain range to avoid a short circuit, and to improve utilization of the height of the battery core, a height of the tab bending space along the first direction is greater than D/10 and less than 3D/4. D is the thickness of the core.

The height of the tab bending space along the first direction is $D_g$, and $D_g$ meets a relational expression: $D*\sin 45° \geq D_g \geq [D/2-(\tan(90°-a)*D_z)] \times \tan \beta$, where D is the thickness of the core, $\beta$ ranges from 10° to 30°, that is, $\beta$ ranges from 10 degrees to 30 degrees, $D_z$ ranges from 1 mm to 2 mm, a is the tab bending angle, and $45° \leq a \leq 135°$, that is a ranges from 45 degrees to 135 degrees.

For example, when the tab bending angle a is 30 degrees, Dz is 1 mm, and $\beta$ is 10 degrees, $[D/2-(\tan(90°-a)*Dz)] \times \tan \beta = [D/2-(\tan(90°-30°)*1)] \times \tan 10°$.

By designing the tab bending space in the embodiments of this application, the tab bending space can be kept within a reasonable range, so as to prevent the tab from being pressed to cause a short circuit, and improve the utilization of the height of the battery core and the battery core capacity.

The battery 10 in the embodiments of this application further includes an inner spacer 4 and an outer spacer 5. Both the inner spacer 4 and the outer spacer 5 are fixedly connected to the cover plate 2. The inner spacer 4 and the outer spacer 5 may alternatively be connected to the cover plate 2 in a fastening manner. The inner spacer 4 is disposed on the inner side surface of the cover plate 2, and a distance between a lower end surface of the inner spacer 4 and an upper end surface of the core 3 ranges from 0 mm to 1 mm. By setting the distance, the bending space may be further limited and supported while preventing the core 3 from moving in the first direction. The outer spacer 5 is disposed on the inner side surface of the cover plate 2 and is disposed perpendicular to the first direction. By disposing the outer spacer 5, the core 3 may be prevented from swaying along a second direction. The second direction is perpendicular to the first direction. Specifically, the second direction is a width or length direction of the battery 10. There is a certain gap between the outer spacer 5 and the core 3 to prevent the core 3 from being pressed and forced with the outer spacer 5 after expansion.

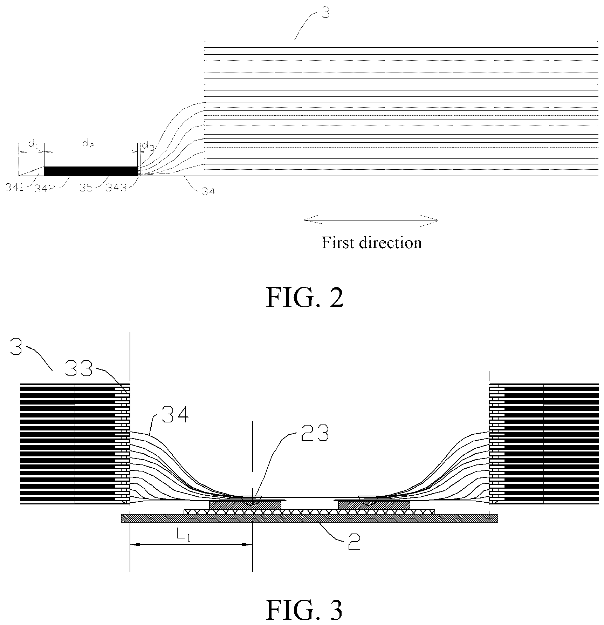

FIG. 2 is a schematic diagram of tabs of a core of a battery that do not bend or that are spread after convergence according to an embodiment of this application. A plurality of tabs 34 of a core 3 form a tab end-portion staggered layer region 341, a tab soldering region 342, and a pre-soldered press-fit region 343 in sequence after convergence. A width of the tab end-portion staggered layer region 341 is $d_1$. A tab protection sheet 35 is disposed in the tab soldering region 342. A width of the tab protection sheet 35 is $d_2$, and a width direction of the tab protection sheet 35 is a left-right direction in FIG. 2. A width of the pre-soldered press-fit region 343 is $d_3$. A thickness of the core 3 is D, and a length of the tab exposed out of the core 3 is determined according to the width of the tab end-portion staggered layer region 341, the width of the tab soldering region 342, the width of the pre-soldered press-fit region 343, the thickness of the core 3, and a tab bending angle a of the tab 34. A tab bending angle of the tab 34 is a, and the length of the tab exposed out of the core 3 is L and meets a relational expression: $L=d_1+d_2+d_3+D/2*\tan a$, and $45°\leq a\leq135°$. 0 mm$<d_1<$8 mm, and preferentially, $d_1$ is 4 mm. In this way, the width of the tab end-portion staggered layer region 341 is suitable, and the width of the tab end-portion staggered layer region 341 may be prevented from being too large, so that the length of the tab exposed out of the core 3 may be more suitable. 8 mm$\leq d_2\leq$12 mm, and preferentially, $d_2$ is 10 mm. In this way, the width of the tab protection sheet 35 is suitable, and a soldering width of the tab soldering region 342 may be ensured, so that the length of the tab exposed out of the core 3 may be more suitable, which is more conductive to production and manufacturing of the core 3. 0.5 mm$\leq d_3\leq$2 mm, and preferentially, $d_3$ is 1.5 mm. When the plurality of tabs 34 are soldered, by setting $d_3$ to 1.5 mm, a width of the pre-soldered press-fit region 343 can be suitable, and a pre-soldering pressing block may press against the plurality of tabs 34, thereby ensuring the soldering quality of the plurality of tabs 34 and further ensuring the production quality of the core 3.

FIG. 3 is a schematic diagram of a core of a battery connected to a cover plate in parallel before convergence or when being spread according to an embodiment of this application. A plurality of tabs 34 are soldered to a cover plate 2 of a battery 10 after convergence and a solder joint 23 is formed. A distance between a core 3 and the solder joint 23 is determined according to a thickness of the core 3, a tab bending angle a of the tab 34, and a width of a tab protection sheet 35. The distance between the core 3 and the solder joint 23 is $L_1$, the thickness of the core 3 is D, the width of the tab protection sheet 35 is $d_2$, and the tab bending angle of the tab 34 is a, and a relational expression is met as follows: $L_1=D/2*\tan a+d_2/2$, where the tab bending angle a meets a relational expression: $45°\leq a\leq135°$. A distance from an end portion of a separator 33 of the core 3 opposite to the solder joint 23 to a center-point position of the solder joint 23 is $L_1$. In this way, the tab 34 can be prevented from being pulled after bending and may further be prevented from being torn. In addition, a length that the tab 34 can move is more suitable to prevent the tab 34 from being pressed, thereby improving the safety of the battery 10 in use.

Other configurations and operations of the battery 10 according to the embodiments of this application are known to those of ordinary skill in the art and will not be described in detail herein.

In description of this specification, description of reference terms such as "specific embodiment" and "specific example" means including specific features, structures, materials, or features described in the embodiment or example in at least one embodiment or example of this application. In this specification, exemplary descriptions of the foregoing terms do not necessarily refer to the same embodiment or example.

Although the embodiments of this application have been shown and described, a person of ordinary skill in the art is to be understood that various changes, modifications, replacements, and variations may be made to the embodiments without departing from the principles and spirit of this application, and the scope of this application is as defined by the appended claims and their equivalents.

**Claims**

1. A battery, comprising:

   a casing;
   a cover plate, the cover plate being configured to cover the casing; and
   a core, the core being disposed in the casing and provided with tabs, a plurality of tabs being connected to the cover plate after convergence, wherein

      a tab bending space for accommodating a bent tab is formed between the cover plate and the core, a height of the tab bending space along a first direction is greater than D/10 and less than 3D/4, and

D is a thickness of the core.

2. The battery according to claim 1, wherein the height of the tab bending space along the first direction is $D_g$, and $D_g$ meets a relational expression:

$$D*\sin 45°{\geq}D_g{\geq}[D/2\text{-}(\tan(90°\text{-}a)*D_z)]{\times}\tan \beta,$$

wherein

D is the thickness of the core, $D_z$ ranges from 1 mm to 2 mm, a is a tab bending angle, and $\beta$ ranges from 10 degrees to 30 degrees.

3. The battery according to claim 2, wherein the tab bending angle ranges from 45 degrees to 135 degrees.

4. The battery according to any one of claims 1 to 3, wherein

the core comprises a positive electrode plate, a negative electrode plate, and a separator disposed between the positive electrode plate and the negative electrode plate;

the tab bending space is divided into a tab bending region and a tab transition region;

the tab bending region is disposed on an end portion of the separator, the tab bends on the end portion of the separator and forms a tab bending angle, and the tab bending angle is located in the tab bending region; and

the tab transition region is disposed between the tab bending region and the cover plate, and the tab after bending passes through the tab transition region and is then fixedly connected to the cover plate.

5. The battery according to claim 4, wherein a height of the tab bending region along the first direction ranges from 1 mm to 2 mm.

6. The battery according to claim 4, wherein

along the first direction, a height of the separator is greater than a height of the negative electrode plate, and the height of the negative electrode plate is greater than a height of the positive electrode plate;

along the first direction, a part of the separator exceeding an end portion of the negative electrode plate is an exposed separator, and a region in which the exposed separator is located forms a separator extension region; and

the tab bends at a junction of the separator extension region and the tab bending region and forms the tab bending angle.

7. The battery according to claim 6, wherein the exposed separator and the tab are in parallel to each other in the separator extension region.

8. The battery according to claim 1, wherein

the battery further comprises an inner spacer and an outer spacer;

the inner spacer and the outer spacer are fixedly connected to the cover plate respectively; and

a distance from a lower surface of the inner spacer to an upper end surface of the core ranges from 0 mm to 1 mm.

9. The battery according to claim 1, wherein

the plurality of tabs converge and form a tab convergence portion, and a tab protection sheet is provided outside the tab convergence portion; and

a cover plate lead-out sheet is further disposed on the cover plate, and the tab protection sheet is connected to the cover plate lead-out sheet.

10. The battery according to claim 9, wherein a width of the tab protection sheet ranges from 8 mm to 12 mm.

10

22

21  24  5  4  2  21  35  13  12  11

E  E
D  D
C  C
B  B
A  A

α

34
33  32

3  31

1

FIG. 1

First direction

FIG. 2

FIG. 3

Europäisches
Patentamt

European
Patent Office

Office européen
des brevets

# EUROPEAN SEARCH REPORT

Application Number

EP 21 19 2778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/251711 A1 (WAKIMOTO RYOICHI [JP] ET AL) 6 August 2020 (2020-08-06) * figure 16 * * paragraph [0105] – paragraph [0111] * ----- | 1-10 | INV. H01M50/538 H01M50/54 H01M50/103 H01M50/105 |
| X | US 2019/221877 A1 (LI XIANG [CN] ET AL) 18 July 2019 (2019-07-18) * figures 1-5 * * paragraph [0021] * * paragraph [0083] – paragraph [0084] * * paragraph [0089] * * paragraph [0092] – paragraph [0093] * * paragraph [0103] * * paragraph [0107] * ----- | 1-10 | H01M50/107 |
| A | US 2019/363401 A1 (LEE DONG HYUN [KR] ET AL) 28 November 2019 (2019-11-28) * paragraphs [0086], [0089]; figure 5b * * paragraph [0048] * ----- | 1-10 | |
| A | CN 210 897 462 U (SICHUAN XINMINYA BATTERY TECH CO LTD ET AL.) 30 June 2020 (2020-06-30) * the whole document * ----- | 1-10 | **TECHNICAL FIELDS SEARCHED (IPC)** H01M |

The present search report has been drawn up for all claims

| Place of search | Date of completion of the search | Examiner |
|---|---|---|
| Munich | 10 January 2022 | Tylus, Urszula |

EPO FORM 1503 03.82 (P04C01)

## ANNEX TO THE EUROPEAN SEARCH REPORT
## ON EUROPEAN PATENT APPLICATION NO.

EP 21 19 2778

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2022

| Patent document cited in search report | | Publication date | Patent family member(s) | | Publication date |
|---|---|---|---|---|---|
| US 2020251711 | A1 | 06-08-2020 | CN | 110326133 A | 11-10-2019 |
| | | | JP WO2018155521 A1 | | 19-12-2019 |
| | | | US | 2020251711 A1 | 06-08-2020 |
| | | | WO | 2018155521 A1 | 30-08-2018 |
| US 2019221877 | A1 | 18-07-2019 | CN | 107968182 A | 27-04-2018 |
| | | | CN | 111785904 A | 16-10-2020 |
| | | | EP | 3512001 A1 | 17-07-2019 |
| | | | US | 2019221877 A1 | 18-07-2019 |
| US 2019363401 | A1 | 28-11-2019 | CN | 110326131 A | 11-10-2019 |
| | | | EP | 3588618 A2 | 01-01-2020 |
| | | | KR | 20180097087 A | 30-08-2018 |
| | | | US | 2019363401 A1 | 28-11-2019 |
| | | | WO | 2018155853 A2 | 30-08-2018 |
| CN 210897462 | U | 30-06-2020 | NONE | | |

EPO FORM P0459

For more details about this annex : see Official Journal of the European Patent Office, No. 12/82